# EUROPÄISCHE PATENTANMELDUNG

(11) **EP 3 772 049 A1**
(43) Veröffentlichungstag der Anmeldung: **03.02.2021**
(21) Anmeldenummer: 20186795.9
(22) Anmeldetag: 20.07.2020
(51) Int. Cl.: G08G 1/14, B60W 30/06, B62D 15/02, H04W 4/46

(54) **VERFAHREN ZUM POTENTIELLEN DURCHFÜHREN EINES PARKVORGANGS EINES FAHRZEUGS IN EINE PARKLÜCKE EINES PARKBEREICHS MIT MEHREREN PARKLÜCKEN, SOWIE KOMMUNIKATIONSSYSTEM**

(30) Priorität: 02.08.2019 DE 102019211662
(71) Anmelder: VOLKSWAGEN AG, 38440 Wolfsburg (DE)
(72) Erfinder: Ette, Bernd, 38442 Wolfsburg (DE)

(57) **Zusammenfassung**

Die Erfindung betrifft ein Verfahren zum potentiellen Durchführen eines Parkvorgangs eines Fahrzeugs in eine Parklücke eines Parkbereichs (1) mit mehreren Parklücken (P1, P2, P3, P4), wobei
- mit einer Ultra-Breitband-Kommunikationseinheit (3) des eine freie Parklücke suchenden Fahrzeugs (2) zumindest ein Ultra-Breitband-Signal (4), wobei
- das zumindest eine ausgesendete Ultra-Breitband-Signal (4) von zumindest einer weiteren Ultra-Breitband-Kommunikationseinheit (6) zumindest eines weiteren Fahrzeugs (7) in dem Parkbereich (1) empfangen wird, wobei
- das zumindest eine empfangene Ultra-Breitband-Signal (4) durch eine Auswerteeinheit (8) der weiteren Ultra-Breitband-Kommunikationseinheit (6) des weiteren Fahrzeugs (7) ausgewertet wird, und
- zumindest ein Ultra-Breitband-Signal (4) von dem weiteren Fahrzeug (7) an die Ultra-Breitband-Kommunikationseinheit (3) des eine freie Parklücke suchenden Fahrzeugs (2) übersendet wird, und
- das eine freie Parklücke suchende Fahrzeug (2) durch das zumindest eine Ultra-Breitband-Signal (4) des zumindest einen weiteren Fahrzeugs (7) eine Information über einen möglichen Parkvorgang im Parkbereich (1) erhält. Des Weiteren betrifft die Erfindung ein Kommunikationssystem (23).

## Beschreibung

Die Erfindung betrifft ein Verfahren zum zumindest potentiellen Durchführen eines Parkvorgangs eines Fahrzeugs in eine Parklücke eines Parkbereichs mit mehreren Parklücken. Des Weiteren betrifft die Erfindung ein Kommunikationssystem mit einer ersten Ultra-Breitband-Kommunikationseinheit eines ersten Fahrzeugs und zumindest einer zweiten Ultra-Breitband-Kommunikationseinheit eines zumindest zweiten Fahrzeugs und mit einer Auswerteeinheit.

Die DE 10 2011 003 772 A1 offenbart ein Verfahren und eine Vorrichtung zur Unterstützung eines Fahrers. Bei einem Verfahren zur Unterstützung eines Fahrers eines ersten Fahrzeugs zum Auffinden einer Parklücke für das erste Fahrzeug wird von einem zweiten Fahrzeug mindestens ein freier Parkplatz ermittelt und in die Position des mindestens einen freien Parkplatzes an das erste Fahrzeug übermittelt, wobei dem mindestens einen freien Parkplatz ein Qualitätsmaß für die Nutzbarkeit einer Parkmöglichkeit für das erste Fahrzeug zugeordnet wird.

Die DE 10 2013 209 298 A1 offenbart ein mobiles System für ein Fahrzeug zum Erkennen eines potentiell frei werdenden Parkplatzes sowie ein Verfahren zum Erkennen von einem potentiell frei werdenden Parkplatz. Das System umfasst zumindest einen Sensor zum Detektieren eines für einen frei werdenden Parkplatz typischen Signals, eine Auswerteeinrichtung zum Beurteilen, ob ein vom Sensor empfangenes Signal einen potentiell frei werdenden Parkplatz bedeutet.

Die DE 10 2016 009 921 A1 offenbart eine Einrichtung zur Kommunikation zwischen einem eine Parklücke begrenzenden geparkten Fahrzeug und einem einzuparkenden Fahrzeug, wobei die Einrichtung ausgebildet ist, eine Übertragung eines fahrzeugspezifischen Minimalabstandes von einem geparkten Fahrzeug an das einzuparkende Fahrzeug zu gestatten.

Ein Nachteil des Stands der Technik ist, dass bei einem Einparkvorgang oder bei einem Auffinden einer Parklücke Umgebungsdaten mittels Ultraschallsensoren erfasst werden. Die erfassten Umgebungsdaten und mögliche weitere Informationen werden über herkömmliche Kommunikationswege an Fahrzeuge oder an Fahrerassistenzsysteme der Fahrzeuge übermittelt. Diese Vorgehensweisen haben auch Nachteile bezüglich der Reichweite, so dass entfernte Parklücken nicht erkannt werden. Darüber hinaus ist die Kommunikation mit anderen Einheiten nur bedingt möglich und diesbezüglich wenig robust, so dass Datenübertragungen limitiert sind.

Aufgabe der vorliegenden Erfindung ist es, ein Verfahren und ein Kommunikationssystem bereitzustellen, mit welchen eine vielfältigere Parklückensuche durch eine drahtlose Kommunikation eines Fahrzeugs mit externen Einheiten ermöglicht ist, so dass potentielle Parklücken besser erkannt werden.

Diese Aufgabe wird durch ein Verfahren und ein Kommunikationssystem gemäß den unabhängigen Patentansprüchen gelöst. Sinnvolle Weiterbildungen ergeben sich aus den Unteransprüchen.

Ein Aspekt der Erfindung betrifft ein Verfahren zum zumindest potentiellen Durchführen eines Parkvorgangs eines Fahrzeugs in eine Parklücke eines Parkbereichs mit mehreren Parklücken. Mit einer Ultra-Breitband-Kommunikationseinheit des eine freie Parklücke suchenden Fahrzeugs wird zumindest ein Ultra-Breitband-Signal, welches eine Information über eine Parklückensuche des Fahrzeugs beinhaltet, in einem Frequenzbereich eines Ultra-Breitband-Kommunikationskanals ausgesendet. Das zumindest eine ausgesendete Ultra-Breitband-Kommunikationssignal wird von zumindest einer weiteren Ultra-Breitband-Kommunikationseinheit zumindest eines weiteren Fahrzeugs in dem Parkbereich empfangen. Das zumindest eine empfangene Ultra-Breitband-Signal wird durch eine Auswerteeinheit der weiteren Ultra-Breitband-Kommunikationseinheit des weiteren Fahrzeugs ausgewertet. Zumindest ein Ultra-Breitband-Signal wird von dem weiteren Fahrzeug an die Ultra-Breitband-Kommunikationseinheit des eine freie Parklücke suchenden Fahrzeugs übersandt und das eine freie Parklücke suchende Fahrzeug erhält durch das zumindest eine Ultra-Breitband-Signal des zumindest einen weiteren Fahrzeugs eine Information über einen möglichen Parkvorgang im Parkbereich. Es wird durch das Verfahren somit ermöglicht, dass durch die UWB-Kommunikation zwischen dem Fahrzeug und dazu externen Einheiten, wie einem weiteren Fahrzeug, Parklücken auch in weiter Entfernung zum Fahrzeug bereits erfahren werden. Die UWB-Kommunikation ist dazu gerade in Parkhäusern, in denen durch vielfältige Verwinkelungen und Abschirmungen anderweitige Technologien eingeschränkt sind, Vorteile. Insbesondere ist diese Kommunikationstechnologie sehr robust. Auch können Kommunikationen über relativ große Reichweiten problemlos geführt und aufrechterhalten werden. Durch die vorgeschlagene Erfindung kann aber auch ein möglicher Einparkvorgang und/oder ein Ausparkvorgang eines Fahrzeugs in eine freie Parklücke mit Hilfe der Ultra-Breitband-Technologie effizienter durchgeführt werden, da mit Hilfe der Ultra-Breitband-Technologie eine vielfältigere und umfänglichere und einfachere Übertragung von Daten durchgeführt werden kann. Insbesondere kann mit Hilfe der Ultra-Breitband-Technologie auf zusätzliche Sensorsysteme, wie Ultraschallsensoren, Radarsensoren oder Abstandssensoren in dem Parkbereich beziehungsweise in einem Parkhaus verzichtet werden.

Unter einer freien Parklücke wird allgemein eine aktuell freie Parklücke wie auch eine aktuell besetzte, aber absehbar oder abschätzbar alsbald frei werdende Parklücke verstanden.

Vorteilhaft ist es, wenn Die Parklückensuche auf Basis der Kommunikation mit externen Einheiten ausschließlich durch UWB-Kommunikation durchgeführt wird. Bei dieser Ausführung werden somit keine anderweitigen Sensorsysteme oder Informationen dieser Sensorsysteme benötigt, um eine freie Parklücke zu finden und/oder in eine freie Parklücke einzuparken oder auszuparken. Dadurch können die eingangs genannten Nachteile dieser Sensorsysteme eliminiert werden.

Beispielsweise kann mit Hilfe der Ultra-Breitband-Technologie ein Abstand zwischen einer Sendeeinheit und einer Empfangseinheit und ebenso auch umgekehrt gemessen werden. Dadurch können mit Hilfe der Ultra-Breitband-Technologie weiterhin Daten auf diesem Weg übertragen und ausgetauscht werden, sowie der gemessene Abstand mit übertragen werden. Bei anderen Kommunikationstechnologien ist dies nur mit einem erhöhten Aufwand mit Hilfe von weiteren Sensoren möglich. Dadurch kann mit dem vorgeschlagenen Verfahren ein verbesserter und effizienterer Parkvorgang des Fahrzeugs in die Parklücke des Parkbereichs durchgeführt werden. Der Parkvorgang kann deshalb effizienter durchgeführt werden, da mit der Ultra-Breitband-Technologie eine schnelle und genauere Datenübertragung durchgeführt werden kann. Ebenso kann mit der Ultra- Breitband-Technologie Rechenzeit beziehungsweise Verarbeitungszeit eingespart werden.

Grundsätzlich ist die Ultra-Breitband-Technologie dahingehend vorteilhaft, da eine sehr breitbandige Funkübertragung möglich ist. Dies ist insbesondere auch dahingehend vorteilhaft, da mittels sehr geringer Strahlungsleistungen eine Überbrückung kurzer Entfernungen ermöglicht ist. Darüber hinaus ermöglicht die Ultra-Breitband-Technologie im Vergleich zu anderen Übertragungsmöglichkeiten sehr hohe Übertragungssicherheit. Ein Ultra-Breitband-Signal ist nur relativ schwer erkennbar und ortbar, da die spektrale Leistungsdichte unterhalb des thermischen Rauschens gehalten wird. Damit ist auch eine hohe Abhörsicherheit beziehungsweise ein unerwünschtes Verlängern derartiger Signale sehr schwer möglich. Nicht zuletzt wird durch die Ultra-Breitband-Technologie eine äußerst genaue Ortung ermöglicht. Im Gegensatz zu beispielsweise Bluetooth oder WLAN basiert die Positionsbestimmung bei der Ultra-Breitband-Technologie nicht auf der Messung von Signalstärken, sondern auf einem Laufzeitverfahren. Dabei wird die Lichtlaufzeit zwischen einem Objekt und mehreren Empfängern gemessen. Mit einer Bandbreite von mindestens 20 Prozent der Mittelfrequenz oder mindestens 500 Megahertz werden bei der Ultra-Breitband-Technologie auch sehr große Frequenzbereiche, insbesondere zwischen 3,1 Gigahertz bis 10,6 Gigahertz genutzt.

Beispielsweise kann mit Hilfe der Ultra-Breitband-Kommunikationseinheit des eine frei Parklücke suchenden Fahrzeugs zumindest das eine Ultra-Breitband-Signal oder mehrere Ultra-Breitband-Signale mit Hilfe des Ultra-Breitband-Kommunikationskanals ausgesendet werden. Dabei können diese ausgesendeten Ultra-Breitband-Signale an ein oder mehrere weitere Fahrzeuge im Bereich des Parkbereichs übermittelt werden. Das ausgesendete Ultra-Breitband-Signal kann von einem oder mehreren Ultra-Breitband-Kommunikationseinheiten der möglichen Fahrzeuge im Bereich des Parkbereichs empfangen werden, sodass die Fahrzeuge im Bereich des Parkbereichs die Information über die Parklückensuche des Fahrzeugs mitgeteilt bekommen. Insbesondere kann mit Hilfe der jeweiligen Auswerteeinheit der weiteren Ultra-Breitband-Kommunikationseinheit des einen weiteren Fahrzeugs Informationen über die eine aktuelle Parklücke in der Umgebung des weiteren Fahrzeugs ermittelt und/oder eine Information über eine noch bevorstehende Parkzeit des weiteren Fahrzeugs oder bei einem in der Nähe des weiteren Fahrzeugs frei werdenden Parklücke über den Ultra-Breitband-Kommunikationskanal an die Ultra-Breitband-Kommunikationseinheit des Parklücken suchenden Fahrzeugs übersandt werden. Mit Hilfe dieser übersendeten Information beziehungsweise Informationen kann das eine freie Parklücken suchende Fahrzeug einen möglichen Parkvorgang im Parkbereich auswerten und gegebenenfalls einen bevorstehenden Parkvorgang vorbereiten oder eine weitere Suchabfrage starten, falls die vorgeschlagene Parklücke nicht ausreichend ist. Mit Hilfe der Kommunikation zwischen der Ultra-Breitband-Kommunikationseinheit des eine freie Parklücken suchenden Fahrzeugs und des weiteren Fahrzeugs können neben Informationen weitere Informationen oder Daten ausgetauscht werden.

Beispielsweise kann es sich bei dem einen freien Parklücke suchenden Fahrzeug oder bei dem weiteren Fahrzeug um ein Kraftfahrzeug, ein Elektrofahrzeug oder um ein Hybridfahrzeug handeln.

Insbesondere kann das eine freie Parklücken suchende Fahrzeug und das weitere Fahrzeug ein zumindest teilautonom oder insbesondere ein vollautonom betriebenes Fahrzeug sein. Insbesondere ist das Fahrzeug mit der Autonomiestufe 5 ausgebildet.

Beispielsweise können mit Hilfe eines Fahrerassistenzsystems die Informationen über den möglichen Parkvorgang auswertet werden, sodass ein automatischer Parkvorgang in die Parklücke durchgeführt werden kann.

Bei dem Parkbereich kann es sich insbesondere um ein Parkhaus oder um eine Parkplatzinfrastruktur oder um einen herkömmlichen Parkplatz handeln. Das Parkhaus weist Wände auf, die das Parkhaus begrenzen. Insbesondere werden dadurch auch Parkebenen begrenzt und/oder einzelne Parklückenbereiche mit mehreren Parklücken begrenzt.

Beispielsweise kann zumindest eine fahrzeugexterne Ultra-Breitband-Kommunikationseinheit in dem Parkbereich angeordnet werden. Mit der zumindest einen fahrzeugexternen Ultra-Breitband-Kommunikationseinheit kann insbesondere das eine freie Parklücken suchende Fahrzeug bei einem Parkvorgang unterstützt werden.

Insbesondere kann das eine freie Parklücken suchende Fahrzeug und das eine weitere Fahrzeug kommunikationstechnisch mit einem Kommunikationssystem des Parkbereichs verbunden werden. Dabei können dem einen freie Parklücken suchenden Fahrzeug und dem einen weiteren Fahrzeug zumindest eine spezifische Information des Parkbereichs bereitgestellt und übermittelt werden. Beispielsweise handelt es sich bei der zumindest einen spezifischen Information zumindest um eine der nachfolgenden Kriterien: Parklückenauslastung des Parkbereichs, Parklückenkapazität des Parkbereichs, Ausrichtung und/oder eine Orientierung von Parklücken in dem Parkbereich, Typ beziehungsweise Art der Parklücken in dem Parkbereich, eine Grundstruktur des Parkbereichs, eine Parklückendimension oder um einen Lageplan der einzelnen Parklücken in dem Parkbereich. Diese Beispiele sind nicht abschließend zu verstehen, sondern sollen die Vielfältigkeit der spezifischen Information des Parkbereichs darstellen.

Beispielsweise kann beim Eintreffen des eine freie Parklücke suchenden Fahrzeugs in dem Parkbereich, dem einen freie Parklücke suchenden Fahrzeugs automatisch die zumindest eine spezifische Information des Parkbereichs bereitgestellt werden.

In einer vorteilhaften Ausführung ist ein Muster von Parklücken eines Parkhauses als elektronische Informationen bereitgestellt. Ein Muster kann die Anzahl der Parklücken und/oder die Orientierung der Parklücken und/oder die Maße der Parklücken darstellen. Es wird dadurch praktisch ein Grundriss eines Parkbereichs elektronisch bereitgestellt. Diese Information kann zusammen mit den Informationen in den Ultra-Breitband-Signalen für die Bestimmung, ob und gegebenenfalls wo eine Parklücke frei ist oder frei wird, zugrunde gelegt werden. Diese elektronische Information des Musters der Parklücken kann beispielsweise über in Kommunikationssystem, insbesondere des Parkbereichs, insbesondere des Parkhauses, bereitgestellt werden. Es kann beispielsweise beim Einfahren des Fahrzeugs in den Parkbereich an das Fahrzeug übermittelt werden. Es kann aber auch anderweitig an das Fahrzeug übermittelt werden. Dieses Muster kann auch dem zumindest einen weiteren Fahrzeug bereitgestellt werden.

Es kann auch vorgesehen sein, dass das Fahrzeug zusätzlich zur Ultra-Breitband-Kommunikationseinheit zumindest ein Sensorsystem, wie ein Ultraschallvorrichtung und/oder eine Radarvorrichtung und/oder eine Lidar-Vorrichtung und/oder eine Kamera aufweist. Insbesondere können bei einem Einparkvorgang des Fahrzeugs in einer Parklücke, in welche keine UW-Kommunikation mit anderen externen Einheiten möglich oder sinnvoll ist, die Informationen des Sensorsystems genutzt werden. Beispielsweise wenn in dem Parkbereich kein weiteres Fahrzeug ist.

In einer vorteilhaften Ausgestaltung der Erfindung ist vorgesehen, dass mit einem elektronischen Fahrzeugführungssystem des eine freie Parklücke suchenden Fahrzeugs abhängig von der Information der Parkvorgang automatisch durchgeführt wird. Dadurch kann ein effizienter und schnellerer Parkvorgang in die Parklücke durchgeführt werden. Beispielsweise kann somit ein genauerer und/oder präziserer Parkvorgang durchgeführt werden. Dadurch kann insbesondere der Einparkvorgang ohne Zutun eines Nutzers des Fahrzeugs durchgeführt werden. Insbesondere bietet dies den Vorteil bei teilautonomen oder vollautonomen Fahrzeugen. Beispielsweise kann das elektronische Fahrzeugführungssystem ein Einparkassistenzsystem aufweisen, mit welchem in Abhängigkeit der Informationen über die mögliche freie Parklücke im Parkbereich der Parkvorgang selbständig und automatisch durchgeführt werden kann. Dadurch kann beispielsweise einem Nutzer eine angenehmere Fahrt mit dem Parklücke suchenden Fahrzeug bereitgestellt werden.

Beispielsweise kann das elektronische Fahrzeugführungssystem des eine freie Parklücke suchenden Fahrzeugs mit der Ultra-Breitband-Kommunikationseinheit des eine freie Parklücke suchenden Fahrzeugs kommunikativ gekoppelt sein, sodass die übermittelten Informationen schnellstmöglich dem elektronischen Fahrzeugführungssystem bereitgestellt werden können. Ebenso ist es denkbar, dass das elektronische Fahrzeugführungssystem einen manuell durchgeführten Parkvorgang durch einen Nutzer des eine freie Parklücke suchenden Fahrzeugs unterstützt. Beispielsweise kann das elektronische Fahrzeugführungssystem mit Hilfe der Ultra-Breitband-Kommunikationseinheit des eine freie Parklücke suchenden Fahrzeugs eine weitere Information an die weiteren Fahrzeuge im Parkbereich senden, sodass diese über den bevorstehenden automatisch durchgeführten Parkvorgang informiert werden.

Vorzugsweise ist vorgesehen, dass mit der Information des eine freie Parklücke suchenden Fahrzeugs eine Entfernung zu einer freien Parklücke und/oder einer Position einer Parklücke im Parkbereich oder ein Parklückenmaß der freien Parklücke und/oder ein Zeitpunkt einer frei werdenden Parklücke bereitgestellt wird. Dadurch kann der mögliche durchzuführende Parkvorgang präziser vorbereit und durchgeführt werden. Insbesondere können diese Informationen mit der Information über das übersandte Ultra-Breitband-Signal an das eine freie Parklücke suchende Fahrzeug übermittelt werden. Insbesondere können diese Informationen von dem zumindest einem weiteren Fahrzeug im Parkbereich über den Breitband-Kommunikationskanal an die Ultra-Breitband-Kommunikationseinheit des eine freie Parklücke suchenden Fahrzeugs übermittelt werden. Insbesondere können diese Informationen dem elektronischen Fahrzeugführungssystem des eine freie Parklücke suchenden Fahrzeugs bereitgestellt werden, sodass das elektronische Fahrzeugführungssystem einen automatischen Parkvorgang in die frei werdende Parklücke vorbereiten und anschließend durchführen kann.

In einem weiteren vorteilhaften Ausführungsbeispiel der Erfindung ist vorgesehen, dass auf Basis zumindest des Ultra-Breitband-Signals des einen freie Parklücke suchende Fahrzeugs und/oder des Ultra-Breitband-Signals des weiteren Fahrzeugs eine Entfernungsmessung zwischen der Ultra-Breitband-Kommunikationseinheit des weiteren Fahrzeugs und der Ultra-Breitband-Kommunikationseinheit des eine freie Parklücke suchenden Fahrzeugs durchgeführt wird. Dadurch kann mit Hilfe des elektronischen Fahrzeugführungssystems des eine Parklücke suchenden Fahrzeugs die Entfernung und die Fahrzeit von der aktuellen Position des eine Parklücke suchenden Fahrzeugs zu der beispielsweise frei werdenden Lücke in der Nähe des weiteren Fahrzeugs durchgeführt werden. Insbesondere kann mit Hilfe der Entfernungsmessung bei einer autonomen Fahrt des eine Parklücke suchenden Fahrzeugs eine jeweilige Entfernung zwischen den weiteren Fahrzeugen in dem Parkbereich ermittelt werden, sodass es zu keinen Kollisionen kommt. Insbesondere kann mit Hilfe der Entfernungsmessung die potenziell frei werdende Parklücke besser lokalisiert werden.

In einer vorteilhaften Ausgestaltung der Erfindung ist vorgesehen, dass mit einer ersten Ultra-Breitband-Kommunikationseinheit eines ersten parkenden Fahrzeugs ein Ultra-Breitband-Signal an die zweite Ultra-Breitband-Kommunikationseinheit des zumindest zweiten parkenden Fahrzeugs ausgesendet und/oder mit einer zweiten Ultra-Breitband-Kommunikationseinheit zumindest eines zweiten parkenden Fahrzeugs ein Ultra-Breitband-Signal an die erste Ultra-Breitband-Kommunikationseinheit des ersten parkenden Fahrzeugs ausgesendet wird. Eine Laufzeit des ausgesendeten Ultra-Breitband-Signals wird ermittelt wird. Anhand der ermittelten Laufzeit des ausgesendeten Ultra-Breitband-Signals wird ein Abstand zwischen dem ersten und dem zumindest zweiten parkenden Fahrzeugs bestimmt. Mit Hilfe des ausgesandten und empfangenen Ultra-Breitband-Signals kann der Abstand zwischen dem ersten und dem zumindest zweiten parkenden Fahrzeugs bestimmt werden, sodass mit Hilfe des ermittelten Abstands beispielsweise ein Auspark- oder ein Einparkvorgang genauer und zugleich schneller durchgeführt werden kann. Insbesondere kann der ermittelte Abstand mit Hilfe des Ultra-Breitband-Signals an die Ultra-Breitband-Kommunikationseinheit des eine Parklücke suchenden Fahrzeugs übersandt werden. Beispielsweise kann somit das eine Parklücke suchende Fahrzeug anhand des Abstandes einen möglichen Einparkvorgang effizienter und ohne Kollisionen mit den parkenden Fahrzeugen durchführen. Dies ist insbesondere deshalb effizienter, dass mittels der Ultra-Breitband-Technologie eine genauere und schnelle Datenverarbeitung durchgeführt werden kann. Insbesondere ist dieser bestimmte Abstand vorteilhaft für das elektronische Fahrzeugführungssystem des eine Parklücke suchenden Fahrzeugs. Mit Hilfe des bestimmten Abstands kann das elektronische Fahrzeugführungssystem einen Parkvorgang automatisch durchführen.

Insbesondere kann der Abstand über ein Laufzeitverfahren beziehungsweise ein laufzeitbasierendes Verfahren der Ultra-Breitband-Technologie durchgeführt werden. Insbesondere wird die Laufzeit zwischen dem ausgesandten Ultra-Breitband-Signal ermittelt und daraufhin eine Entfernungsmessung beziehungsweise der Abstand bestimmt.

Vorzugsweise ist vorgesehen, dass abhängig von dem ermittelten Abstand zwischen dem ersten parkenden Fahrzeug und dem zumindest zweiten parkenden Fahrzeug überprüft wird, ob eine Parklücke zwischen dem ersten parkenden Fahrzeug und dem zumindest zweiten parkenden Fahrzeug frei ist und falls ja, dann wird dem eine freie Parklücke suchenden Fahrzeug über das Ultra-Breitband-Signal von der Ultra-Breitband-Kommunikationseinheit des ersten und/oder des zweiten parkenden Fahrzeugs die Information über die freie Parklücke ermittelt. Dadurch kann anhand des ermittelten Abstands dem einen freien Parklücke suchenden Fahrzeug eine sofortige Rückmeldung über eine mögliche beziehungsweise bevorstehenden oder aktuelle frei Parklücke übersandt werden. Dadurch kann ein Parkvorgang des eine Parklücke suchenden Fahrzeugs in die freie Parklücke durch den Nutzer des eine Parklücke suchenden Fahrzeugs oder durch das elektronische Fahrzeugführungssystem des eine Parklücke suchenden Fahrzeugs durchgeführt werden.

Beispielsweise ist den Ultra-Breitband-Kommunikationseinheiten des ersten und des zweiten parkenden Fahrzeugs oder einer Auswerteeinheit des ersten und/oder zweiten parkenden Fahrzeugs ein vordefinierter Abstand beziehungsweise ein vordefiniertes Maß einer Parklücke vorgegeben, sodass der ermittelte Abstand mit dem vorgegebenen Maß der Parklücke verglichen werden kann. Somit kann bei einem Abstand, welcher zumindest gleich oder größer des Maßes der Parklücke ist auf eine freie Parklücke geschlossen werden. Dadurch kann anhand des Abstandes und des vordefinierten Parklückenmaßes ein schnellerer Abgleich des ermittelten Abstandes hinsichtlich einer möglichen freien Parklücke oder einer nicht freien Parklücke durchgeführt werden.

Beispielsweise können mit dem ermittelten Abstand ebenso mehrere freie Parklücken zwischen dem ersten parkenden Fahrzeug und dem zweiten parkenden Fahrzeug ermittelt werden. Dadurch können beispielsweise bei zeitgleich mehreren eine Parklücke suchenden Fahrzeugen jeder dieser eine Parklücke suchenden Fahrzeuge die Information der jeweiligen freien Parklücke übermittelt werden.

In einem vorteilhaften Ausführungsbeispiel der Erfindung ist vorgesehen, dass mit der Ultra-Breitband-Kommunikationseinheit des einen freien Parklücke suchenden Fahrzeugs eine Parklückensuchanfrage mit dem Ultra-Breitband-Signal an jede Ultra-Breitband-Kommunikationseinheit in der Umgebung des Parkbereichs ausgesendet wird. Dadurch kann eine Informationsausbreitung in der Umgebung des Parkbereichs durchgeführt werden, sodass von zumindest einem Fahrzeug, welches die Parklückensuchanfrage empfangen hat, eine schnelle Gegenantwort beziehungsweise eine schnelle Rückmeldung über eine mögliche Parklücke in dem Parkbereich bereitgestellt werden kann. Dadurch kann insbesondere beim Eintreffen des eine freie Parklücke suchenden Fahrzeugs in dem Parkbereich an jedes Fahrzeug in der Umgebung des Parkbereichs die Parklückensuchanfrage ausgesendet werden, sodass zumindest eine Rückmeldung eines Fahrzeugs in der Umgebung des Parkbereichs an das eine freie Parklücke suchende Fahrzeug zurückgesendet wird. Ein möglichst schneller Parkvorgang in eine freie oder freiwerdende Parklücke kann dadurch durchgeführt werden.

Vorzugsweise ist vorgesehen, dass bei einem bevorstehenden Parkvorgang in eine potentielle Parklücke des eine freie Parklücke suchenden Fahrzeugs mit der Ultra-Breitband-Kommunikationseinheit des eine freie Parklücke suchenden Fahrzeugs eine aktualisierte Information der belegten Parklücke über das Ultra-Breitband-Signal an die zumindest eine weitere Ultra-Breitband-Kommunikationseinheit des zumindest einen weiteren Fahrzeugs in dem Parkbereich übersandt wird. Dadurch kann einem weiteren eine freie Parklücke suchenden Fahrzeugs mitgeteilt werden, dass das eine freie Parklücke suchende Fahrzeug die freie Parklücke belegen wird oder diese soeben belegt hat. Insbesondere kann dadurch sichergestellt werden, dass nicht zwei Fahrzeuge versuchen einen Einparkvorgang in ein und dieselbe freie Parklücke durchzuführen.

Sobald das eine Parklücke suchende Fahrzeug mit Hilfe beim Parkvorgang die Parklücke besetzt beziehungsweise belegt hat, wird an das zumindest eine weitere Fahrzeug im Parkbereich die Information der nun belegten Parklücke übermittelt. Dadurch kann eine geordnete Verkehrssituation beziehungsweise Einparkvorgänge in dem Parkbereich erreicht werden. Dadurch kann insbesondere erreicht werden, dass es zu keinen Kollisionen bei Einpark- oder Ausparkvorgängen kommen kann. Insbesondere kann bei dem bevorstehenden Parkvorgang oder bei dem durchführenden Parkvorgang des eine freie Parklücke suchenden Fahrzeugs dieses dem weiteren eine freie Parklücke suchenden Fahrzeugs übermittelt werden. Dadurch kann die nächste freiwerdende Parklücke dem weiteren eine freie Parklücken suchende Fahrzeug mitgeteilt werden.

Insbesondere kann das eine freie Parklücke suchende Fahrzeug beim Durchführen einer Suchanfrage in einer Prioritätsliste hinzugefügt werden. Beispielsweise kann eine freiwerdende Parklücke dem Fahrzeug zugewiesen oder angeboten werden, welches in der Prioritätsliste die höchste Priorität aufweist.

In einer weiteren vorteilhaften Ausgestaltung der Erfindung ist vorgesehen, dass mit einer Ultra-Breitband-Kommunikationseinheit eines tragbaren Kommunikationsendgeräts eines Nutzers des zumindest einen weiteren Fahrzeugs eine Information über eine zukünftig frei werdende Parklücke über das Ultra-Breitband-Signal an die Ultra-Breitband-Kommunikationseinheit des eine freie Parklücke suchenden Fahrzeugs übersandt wird. Mit Hilfe der Ultra-Breitband-Kommunikationseinheit des tragbaren Kommunikationsendgeräts des Nutzers können bei einer Bewegung des Nutzers innerhalb des Parkbereichs mögliche freie Parklücken erfasst und an die Ultra-Breitband-Kommunikationseinheit des eine freie Parklücke suchenden Fahrzeugs übersandt werden. Ebenso kann beispielsweise mit Hilfe des tragbaren Kommunikationsendgeräts des Nutzers ein baldiges oder bevorstehendes Verlassen des dem Nutzer zugehörigen Fahrzeugs aus einer Parklücke dem eine Parklücke suchenden Fahrzeugs übersandt werden. Dadurch kann dem einen freie Parklücke suchenden Fahrzeug mitgeteilt werden, dass der Nutzer eines parkenden Fahrzeugs im Parkbereich einen Ausparkvorgang demnächst oder aktuell durchführt. Dadurch kann insbesondere dem eine Parklücke suchende Fahrzeug eine aktuelle Information über eine potenziell frei werdende Parklücke übersandt werden. Dadurch kann eine schnellere Bereitstellung eines möglichen Parkvorgangs in eine frei werdende Parklücke des eine Parklücke suchenden Fahrzeugs erreicht werden.

Ein weiterer Aspekt der Erfindung betrifft eine Kommunikationssystem mit einer ersten Ultra-Breitband-Kommunikationseinheit eines ersten Fahrzeugs und zumindest einer zweiten Ultra-Breitband-Kommunikationseinheit eines zumindest zweiten Fahrzeugs und mit einer Auswerteeinheit, wobei das Kommunikationssystem zum Durchführen eines Verfahrens nach einem der vorher geschilderten Aspekte oder einer eines Ausführungsbeispiels davon ausgebildet ist. Insbesondere wird das Verfahren mit dem Kommunikationssystem durchgeführt.

Zu der Erfindung gehören auch Weiterbildungen des erfindungsgemäßen Kommunikationssystems, die Merkmale aufweisen, wie sie bereits im Zusammenhang mit den Weiterbildungen dem erfindungsgemäßen Verfahren beschrieben worden sind. Aus diesem Grund sind die entsprechenden Weiterbildungen des erfindungsgemäßen Kommunikationssystems hier nicht noch einmal beschrieben.

Die Erfindung umfasst auch die Kombinationen der Merkmale der beschriebenen Ausführungsformen.

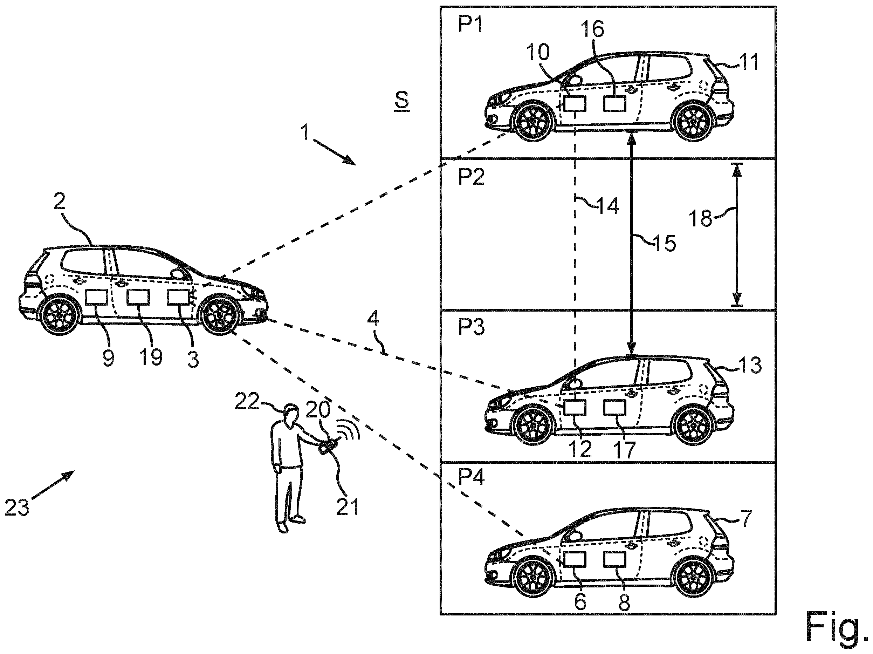

Im Folgenden ist ein Ausführungsbeispiel der Erfindung beschrieben. Hierzu zeigt die einzige Figur ein schematisches Ausführungsbeispiel des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Fig. zeigt einen Parkbereich 1 mit mehreren Parklücken P1, P2, P3, P4. Beispielsweise kann ein eine Parklücke suchendes Fahrzeug 2 eine freie Parklücke P2 in dem Parkbereich 1 suchen.

Bei dem Parkbereich 1 kann es sich beispielsweise um ein Parkhaus oder um eine Parkplatzinfrastruktur handeln.

Das eine freie Parklücke suchende Fahrzeug 2 kann insbesondere mit zumindest einer Ultra-Breitband-Kommunikationseinheit 3, welche das Fahrzeug 2 aufweist, zumindest ein Ultra-Breitband-Signal 4 aussenden.

Unter einer freien Parklücke wird allgemein eine aktuell freie Parklücke wie auch eine aktuell besetzte, aber absehbar oder abschätzbar alsbald frei werdende Parklücke verstanden.

Diese Ultra-Breitband-Signal 4 kann Information über eine Parklückensuche des Fahrzeugs 2 beinhaltet. Das Ultra-Breitband-Signal 4 wird in einem Frequenzbereich eines Ultra-Breitband-Kommunikationskanals ausgesendet. Insbesondere wird das Ultra-Breitband-Signal 4 in die Umgebung 5 im Parkbereich 1 ausgesendet. Das zumindest eine ausgesendete Ultra-Breitband-Signal 4 kann von zumindest einer weiteren Ultra-Breitband-Kommunikationseinheit 6 zumindest eines weiteren Fahrzeugs 7 in dem Parkbereich 1 empfangen werden. Das zumindest eine empfangene Ultra-Breitband-Signal 4 kann durch eine Auswerteeinheit 8 der weiteren Ultra-Breitband-Kommunikationseinheit 6 des weiteren Fahrzeugs 7 ausgewertet werden. Insbesondere kann die Ultra-Breitband-Kommunikationseinheit 6 des weiteren Fahrzeugs 7 das empfangene Ultra-Breitband-Signal 4 des freie Parklücken suchenden Fahrzeugs 2 hinsichtlich der Suchanfrage auswerten. Das weitere Fahrzeug 7 kann über die Ultra-Breitband-Kommunikationseinheit 6 zumindest ein Ultra-Breitband-Signal 4 des weiteren Fahrzeugs 7 an die Ultra-Breitband-Kommunikationseinheit 3 des freie Parklücken suchenden Fahrzeugs 2 übersenden. Insbesondere kann das freie Parklücken suchende Fahrzeug 2 durch das zumindest eine Ultra-Breitband-Signal 4 des zumindest einen weiteren Fahrzeugs 7 eine Information über einen möglichen Parkvorgang im Parkbereich 1 erhalten. Insbesondere kann die Information einen Belegungszustand der Parklücken P1, P2, P3, P4 des Parkbereichs 1 beinhalten.

Beispielsweise kann das freie Parklücken suchende Fahrzeug 2 mit einem elektronischen Fahrzeugführungssystem 9 ausgestattet sein. Mit dem elektronischen Fahrzeugführungssystem 9 des eine freie Parklücke suchenden Fahrzeugs 2 kann in Abhängigkeit von der übermittelten Information der Parkvorgang automatisch durchgeführt werden. Insbesondere kann es sich bei dem elektronischen Fahrzeugführungssystem 9 um ein Parkassistenzsystem handeln.

Beispielsweise kann es sich bei dem freie Parklücken suchenden Fahrzeug 2 um ein zumindest teilautonom, insbesondere vollautonom betriebenes Fahrzeug handeln. Insbesondere kann mit Hilfe der übermittelten Information ein voll autonomer Parkvorgang mit Hilfe des elektronischen Fahrzeugführungssystems 9 in eine möglich frei werdende Parklücke P2 durchgeführt werden.

Insbesondere kann mit der übermittelten Information des eine freie Parklücke suchenden Fahrzeugs 2 eine Entfernung zu einer freien Parklücke P2 und/oder eine Position einer freien Parklücke P2 im Parkbereich 1 und/oder ein Parklückenmaß 18 der freien Parklücke P2 und/oder ein Zeitpunkt einer frei werdenden Parklücke P2 bereitgestellt werden. Insbesondere können diese Informationen mit Hilfe des elektronischen Fahrzeugführungssystems 9 zum Durchführen eines automatischen Einparkvorgangs in die freie Parklücke P2 verwendet werden. Ebenso kann mit der Information eine mögliche Zeitdauer eines Parkvorgangs in eine Parklücke P1, P2, P3 oder P4 oder ein Verlassen des weiteren Fahrzeugs 7 aus der Parklücke P4 bereitgestellt werden. Ebenso kann mit der Information eine Parkplatznummer der Parklücke P1, P2, P3 oder P4 übersandt werden oder beispielsweise können mit der Information gewisse Gegebenheiten der Parklücke P1, P2, P3, P4 des Parkbereichs 1 übermittelt werden. Hierbei können insbesondere Stützpfeiler oder Wände oder andere Objekte in der Parklücke P1, P2, P3, P4 mit Hilfe der Information an das eine freie Parklücke suchenden Fahrzeugs 2 übersandt werden.

Beispielsweise kann auf Basis des zumindest einen Ultra-Breitband-Signals 4 des einen freien Parkplatz suchenden Fahrzeugs 2 und/oder des Ultra-Breitband-Signals 4 des weiteren Fahrzeugs 7 eine Entfernungsmessung zwischen der Ultra-Breitband-Kommunikationseinheit 6 des weiteren Fahrzeugs 7 und der Ultra-Breitband-Kommunikationseinheit 3 des eine freie Parklücke suchenden Fahrzeugs 2 durchgeführt werden. Dadurch können insbesondere die Entfernungen zwischen den einzelnen Fahrzeugen im Parkbereich 7 bestimmt werden. Dadurch können insbesondere Kollisionen rechtzeitig erkannt und verhindert werden. Ebenso kann mit Hilfe des elektronischen Fahrzeugführungssystems 9 ein verbesserter automatischer Einparkvorgang in eine mögliche Parklücke P1, P2, P3, P4 analysiert und durchgeführt werden. Mit Hilfe der Entfernungsmessung kann eine bessere Orientierung des einen freie Parklücken suchenden Fahrzeugs 2 im Parkbereich 1 erreicht werden. Ebenso können mit Hilfe der Entfernungsmessung Objekte und Fahrzeuge in der Umgebung 5 des Parkbereichs 1 effizienter lokalisiert werden.

Beispielsweise kann mit einer ersten Ultra-Breitband-Kommunikationseinheit 10 eines ersten parkenden Fahrzeugs 11 das Ultra-Breitband-Signal 14 an eine zweite Ultra-Breitband-Kommunikationseinheit 12 eines zumindest zweiten parkenden Fahrzeugs 13 ausgesendet werden. Ebenso kann mit der zweiten Ultra-Breitband-Kommunikationseinheit 12 des zweiten parkenden Fahrzeugs 13 das Ultra-Breitband-Signal 14 an die erste Ultra-Breitband-Kommunikationseinheit 10 des ersten parkenden Fahrzeugs 11 ausgesandt werden. Dadurch kann insbesondere eine Laufzeit des ausgesendeten Ultra-Breitband-Signals 14 ermittelt werden. Insbesondere wird dies mit Hilfe einer Laufzeitmessung beziehungsweise eines Laufzeitverfahrens der Ultra-Breitband-Technologie angewendet. Anhand der ermittelten Laufzeit des ausgesendeten Ultra-Breitband-Signals 14 kann ein Abstand 15 zwischen dem ersten und dem zumindest zweiten parkenden Fahrzeug 11, 13 bestimmt werden. Mit Hilfe des ermittelten Abstands 15 kann der Bereich zwischen dem ersten parkenden Fahrzeug 11 und dem zweiten parkenden Fahrzeug 13 analysiert und ausgewertet werden. Insbesondere kann die Laufzeit des ausgesendeten Ultra-Breitband-Signals 14 mit einer Auswerteeinheit 16 des ersten parkenden Fahrzeugs 11 oder mit einer Auswerteeinheit 17 des zweiten parkenden Fahrzeugs 13 durchgeführt werden.

Insbesondere kann abhängig von dem ermittelten Abstand 15 zwischen dem ersten parkenden Fahrzeug 11 und dem zumindest zweiten parkenden Fahrzeug 13 überprüft werden, ob die Parklücke P2 zwischen dem ersten parkenden Fahrzeug 11 und dem zumindest zweiten parkenden Fahrzeug 13 frei ist. Falls dies der Fall ist, dann wird dem eine Parklücke suchenden Fahrzeug 2 über das Ultra-Breitband-Signal 4 von der Ultra-Breitband-Kommunikationseinheit 10, 12 des ersten und/oder des zweiten parkenden Fahrzeugs 11, 13 die Information über die freie Parklücke P2 übermittelt. Dadurch kann dem einen freien Parklücken suchende Fahrzeug 2 die Information über die freie Parklücke P2 übermittelt werden und ein automatischer oder ein manueller Parkvorgang durchgeführt werden. Beispielsweise kann der ermittelte Abstand 15 mit Hilfe der Auswerteeinheiten 16, 17 des ersten parkenden Fahrzeugs 11 und/oder des zweiten parkenden Fahrzeugs 13 anhand des vordefinierten Parklückenmaßes 18 verglichen und ausgewertet werden. Insbesondere kann bei einem Abstand 15, welcher gleich oder größer des Parklückenmaßes 18 ist, darauf schlussgefolgert werden, dass zwischen dem ersten parkenden Fahrzeug 11 und dem zumindest zweiten parkenden Fahrzeug 13 die Parklücke P2 frei ist.

Beispielsweise kann mit der Ultra-Breitband-Kommunikationseinheit 13 des eine freie Parklücke suchenden Fahrzeugs 2 eine Parklückensuchanfrage mit dem Ultra-Breitband-Signal 4 an jede Ultra-Breitband-Kommunikationseinheit 10, 12, 6 in der Umgebung 5 des Parkbereichs 1 ausgesendet werden. Insbesondere kann die Parklückensuchanfrage mit Hilfe einer Auswerteeinheit 19 des eine Parklücke suchenden Fahrzeugs 2 angeregt oder insbesondere von dem elektronischen Fahrzeugführungssystem 9 oder von einem Nutzer des eine freie Parklücke suchenden Fahrzeugs 2 durchgeführt werden. Dadurch kann insbesondere eine schnelle Rückantwort eines der Fahrzeuge 11, 13, 7 des Parkbereichs 1 an das eine freie Parklücken suchende Fahrzeug 2 übersandt werden.

Beispielsweise kann bei einem bevorstehenden Parkvorgang in eine potentielle freie Parklücke P2 des eine freie Parklücke suchenden Fahrzeugs 2 mit der Ultra-Breitband-Kommunikationseinheit 3 des eine freie Parklücke suchenden Fahrzeugs 2 eine aktualisierte Information der belegten Parklücke P2 über das Ultra-Breitband-Signal 4 an die zumindest eine weitere Ultra-Breitband-Kommunikationseinheit 6 des zumindest einen weiteren Fahrzeugs 7 in dem Parkbereich 1 übersandt werden. Dadurch kann beispielsweise ein nächstes beziehungsweise ein weiteres eine freie Parklücke suchende Fahrzeug in dem Parkbereich 1 davon in Kenntnis gesetzt werden, dass das frei Parklücken suchende Fahrzeug 2 eine freie Parklücke gefunden hat und einen Parkvorgang in diese durchführt, sodass das eine freie Parklücken suchende Fahrzeug 2 in der freien Parklücke P2 parkt. Dadurch kann insbesondere das eine freie Parklücke suchende Fahrzeug 2 den weiteren Fahrzeugen 11, 13, 7 in dem Parkbereich 1 mitteilen, dass es keine Parklücke P1, P2, P3, P4 mehr sucht.

Beispielsweise kann mit einer Ultra-Breitband-Kommunikationseinheit 20 eines tragbaren Kommunikationsendgeräts 21 eines Nutzers 22 des zumindest einen weiteren Fahrzeugs 7 eine Information über eine zukünftig frei werdende Parklücke P4 über das Ultra-Breitband-Signal 4 an die Ultra-Breitband-Kommunikationseinheit 3 des eine Parklücke suchenden Fahrzeugs 2 übersandt werden. Dadurch kann beispielsweise der Nutzer 22 des weiteren Fahrzeugs 7 über die Ultra-Breitband-Kommunikationseinheit 20 des tragbaren Kommunikationsendgeräts 21 dem eine freie Parklücke suchenden Fahrzeug 2 mitteilen, dass ein bevorstehender Ausparkvorgang des weiteren Fahrzeugs 7 aus der Parklücke P4 bevorsteht. Dadurch kann das eine freie Parklücke suchende Fahrzeug 2 einen Parkvorgang in die Parklücke P4 vorbereiten, sodass sobald die Parklücke P4 frei ist, ein Parkvorgang durchgeführt werden kann.

Beispielsweise können die Ultra-Breitband-Kommunikationseinheiten 3, 10, 12, 6 und die Auswerteeinheiten 8, 17, 16, 19 Teil eines Kommunikationssystems 23 sein. Mit dem Kommunikationssystem 23 kann insbesondere ein Ultra-Breitband-Kommunikationssystem bereitgestellt werden, welches die komplette Kommunikation zwischen den Fahrzeugen 2, 11, 18, 7 in dem Parkbereich 1 überwacht und überprüft.

### Bezugszeichenliste

- 1: Parkbereich
- 2: Parklücken suchende Fahrzeug
- 3, 6, 10, 12, 20: Ultra-Breitband-Kommunikationseinheit
- 4, 14: Ultra-Breitband-Signal
- 5: Umgebung
- 7, 11, 13: Fahrzeug
- 8, 16, 17, 19: Auswerteeinheit
- 9: elektronisches Fahrzeugführungssystem
- 15: Abstand
- 18: Parklückenmaß
- 21: tragbares Kommunikationsendgerät
- 22: Nutzer
- 23: Kommunikationssystem
- P1 bis P4: Parklücke

## Patentansprüche

1. Verfahren zum potentiellen Durchführen eines Parkvorgangs eines Fahrzeugs (2) in eine Parklücke (P1, P2, P3, P4) eines Parkbereichs (1) mit mehreren Parklücken (P1, P2, P3, P4),
**dadurch gekennzeichnet, dass**
- mit einer Ultra-Breitband-Kommunikationseinheit (3) des eine freie Parklücke suchenden Fahrzeugs (2) zumindest ein Ultra-Breitband-Signal (4), welches eine Information über eine Parklückensuche des Fahrzeugs (2) beinhaltet, in einem Frequenzbereich eines Ultra-Breitband-Kommunikationskanal ausgesendet wird, wobei
- das zumindest eine ausgesendete Ultra-Breitband-Signal (4) von zumindest einer weiteren Ultra-Breitband-Kommunikationseinheit (6) zumindest eines weiteren Fahrzeugs (7) in dem Parkbereich (1) empfangen wird, wobei
- das zumindest eine empfangene Ultra-Breitband-Signal (4) durch eine Auswerteeinheit (8) der weiteren Ultra-Breitband-Kommunikationseinheit (6) des weiteren Fahrzeugs (7) ausgewertet wird, und
- zumindest ein Ultra-Breitband-Signal (4) von dem weiteren Fahrzeug (7) an die Ultra-Breitband-Kommunikationseinheit (3) des eine freie Parklücke suchenden Fahrzeugs (2) übersendet wird, und
- das eine freie Parklücke suchende Fahrzeug (2) durch das zumindest eine Ultra-Breitband-Signal (4) des zumindest einen weiteren Fahrzeugs (7) eine Information über einen möglichen Parkvorgang im Parkbereich (1) erhält.

2. Verfahren nach Anspruch 1,
**dadurch gekennzeichnet, dass**
mit einem elektronischen Fahrzeugführungssystem (9) des eine freie Parklücke suchenden Fahrzeugs (2) in Abhängigkeit von der Information der Parkvorgang automatisch durchgeführt wird.

3. Verfahren nach einem der vorhergehenden Ansprüche,
**dadurch gekennzeichnet, dass**
mit der Information des eine freie Parklücke suchenden Fahrzeugs (2) eine Entfernung zu einer freien Parklücke (P2) und/oder eine Position einer freien Parklücke (P2) im Parkbereich (1) und/oder ein Parklückenmaß (18) der freien Parklücke (P2) und/oder ein Zeitpunkt einer freiwerdenden Parklücke (P2) bereitgestellt wird.

4. Verfahren nach einem der vorhergehenden Ansprüche,
**dadurch gekennzeichnet, dass**
auf Basis zumindest des Ultra-Breitband-Signals (4) des eine freie Parklücke suchende Fahrzeugs (2) und/oder des Ultra-Breitband-Signals (4) des weiteren Fahrzeugs (7) eine Entfernungsmessung zwischen der Ultra-Breitband-Kommunikationseinheit (6) des weiteren Fahrzeugs (7) und der Ultra-Breitband-Kommunikationseinheit (3) des eine freie Parklücke suchenden Fahrzeugs (2) durchgeführt wird.

5. Verfahren nach einem der vorhergehenden Ansprüche,
**dadurch gekennzeichnet, dass**
mit einer ersten Ultra-Breitband-Kommunikationseinheit (10) eines ersten parkenden Fahrzeugs (11) an eine zweiten Ultra-Breitband-Kommunikationseinheit (12) eines zumindest zweiten parkenden Fahrzeugs (13) ausgesendet und/oder mit der zweiten Ultra-Breitband-Kommunikationseinheit (12) zumindest des zweiten parkenden Fahrzeugs (13) ein Ultra-Breitband-Signal (14) an die erste Ultra-Breitband-Kommunikationseinheit (10) des ersten parkenden Fahrzeugs (11) ausgesendet wird und eine Laufzeit des ausgesendeten Ultra-Breitband-Signals (14) ermittelt wird, wobei anhand der ermittelten Laufzeit des ausgesendeten Ultra-Breitband-Signals (14) ein Abstand (15) zwischen dem ersten und dem zumindest zweiten parkenden Fahrzeug (11, 13) bestimmt wird.

6. Verfahren nach Anspruch 5,
**dadurch gekennzeichnet, dass**
abhängig vom dem ermittelten Abstand (15) zwischen dem ersten parkenden Fahrzeug (11) und dem zumindest zweiten parkenden Fahrzeug (13) überprüft wird, ob eine Parklücke (P2) zwischen dem ersten parkenden Fahrzeug (11) und dem zumindest zweiten parkenden Fahrzeug (13) frei ist und falls ja, dann wird dem eine freie Parklücke suchenden Fahrzeug (2) über das Ultra-Breitband-Signal (4) von der Ultra-Breitband-Kommunikationseinheit (10, 12) des ersten und/oder des zweiten parkenden Fahrzeugs (11, 13) die Information über die freie Parklücke (P2) übermittelt.

7. Verfahren nach einem der vorhergehenden Ansprüche,
**dadurch gekennzeichnet, dass**
mit der Ultra-Breitband-Kommunikationseinheit (3) des eine freie Parklücke suchenden Fahrzeugs (2) eine Parklückensuchanfrage mit dem Ultra-Breitband-Signal (4) an jede Ultra-Breitband-Kommunikationseinheit (6, 10, 12, 20) in der Umgebung (5) des Parkbereichs (1) ausgesendet wird.

8. Verfahren nach einem der vorhergehenden Ansprüche,
**dadurch gekennzeichnet, dass**
bei einem bevorstehenden Parkvorgang in eine potentielle Parklücke (P2) des eine freie Parklücke suchenden Fahrzeugs (2) mit der Ultra-Breitband-Kommunikationseinheit (3) des eine freie Parklücke suchenden Fahrzeugs (2) eine aktualisierte Information der belegten Parklücke (P2) über das Ultra-Breitband-Signal (4) an die zumindest eine weitere Ultra-Breitband-Kommunikationseinheit (6) des zumindest einen weiteren Fahrzeugs (7) in dem Parkbereich (1) übersendet wird.

9. Verfahren nach einem der vorhergehenden Ansprüche,
**dadurch gekennzeichnet, dass**
mit einer Ultra-Breitband-Kommunikationseinheit (20) eines tragbaren Kommunikationsendgeräts (21) eines Nutzers (22) des zumindest einen weiteren Fahrzeugs (7) eine Information über eine zukünftig freiwerdende Parklücke (P1, P2, P3, P4) über das Ultra-Breitband-Signal (4) an die Ultra-Breitband-Kommunikationseinheit (3) des eine freie Parklücke suchende Fahrzeugs (2) übersandt wird.

10. Kommunikationssystem (23), mit einer ersten Ultra-Breitband-Kommunikationseinheit (3, 6, 10, 12) eines ersten Fahrzeugs (2, 7, 11, 13) und zumindest einer zweiten Ultra-Breitband-Kommunikationseinheit (3, 6, 10, 12) eines zumindest zweiten Fahrzeugs (2, 7, 11, 13) und mit einer Auswerteeinheit (8, 16, 17, 19), wobei das Kommunikationssystem () zum Durchführen eines Verfahrens nach einem der vorhergehenden Ansprüche ausgebildet ist.
